# EUROPÄISCHE PATENTSCHRIFT

(11) **EP 1 289 401 B1**
(45) Veröffentlichungstag und Bekanntmachung des Hinweises auf die Patenterteilung: **11.08.2004**
(21) Anmeldenummer: 01936444.7
(22) Anmeldetag: 08.06.2001
(51) Int. Cl.: A47L 9/19

(54) **FÜLLSTANDANZEIGE FÜR DEN FÜLLSTAND EINES FILTERBEUTELS UND VERFAHREN ZUM BETREIBEN EINES STAUBSAUGERS**
LEVEL INDICATOR FOR INDICATING THE FILLING LEVEL OF A FILTER BAG AND METHOD FOR OPERATING A VACUUM CLEANER
INDICATEUR DE NIVEAU INDIQUANT L'ETAT DE REMPLISSAGE D'UN SACHET FILTRANT ET PROCEDE PERMETTANT DE FAIRE FONCTIONNER UN ASPIRATEUR

(30) Priorität: 10.06.2000 DE 10028828; 20.07.2000 DE 10035656
(43) Veröffentlichungstag der Anmeldung: 12.03.2003
(73) Patentinhaber: Vorwerk & Co. Interholding GmbH, 42275 Wuppertal (DE)
(72) Erfinder: ARNOLD, Hans-Peter, 51709 Marienheide (DE); HOFFMANN, Thomas, 58332 Schwelm (DE)
(74) Vertreter: Müller, Enno, Dipl.-Ing.
(86) Internationale Anmeldenummer: PCT/EP2001/006507
(87) Internationale Veröffentlichungsnummer: WO 2001/095778

(56) Entgegenhaltungen:
- DE-A- 2 644 697
- DE-A- 3 112 376
- DE-A- 3 643 378
- US-A- 2 325 188
- US-A- 3 177 635
- US-A- 4 060 050
- US-A- 4 100 878
- US-A- 4 245 370
- US-A- 4 654 924
- US-A- 4 733 431

## Beschreibung

Die Erfindung betrifft eine Füllstandanzeige für den Füllstand eines Filterbeutels in einem Staubsauger mit einem Anzeigekolben, wobei der Anzeigekolben durch die Druckdifferenz am Filterbeutel bewegbar ist, wobei weiter der Anzeigekolben als Membrankolben mit einer rollbaren Weichmembran ausgebildet ist und einen Kolbenschaft aufweist, der in eine Ruhestellung des Anzeigekolbens vorgespannt ist.

Füllstandanzeigen der in Rede stehenden Art sind bekannt. Hier wird beispielsweise auf die US-A-2 325 188 und auf die DE-A1 26 38 672 verwiesen. Als nachteilig erweisen sich die bekannten Lösung dahin gehend, dass für den Anzeigekolben Führungselemente benötigt werden, die jedoch die Messgenauigkeit negativ beeinflussen.

Im Hinblick auf den zuvor beschriebenen Stand der Technik wird eine technische Problematik der Erfindung darin gesehen, eine Füllstandanzeige der in Rede stehenden Art anzugeben, welche sich durch eine erhöhte Messgenauigkeit auszeichnet.

Diese Problematik ist zunächst und im Wesentlichen beim Gegenstand des Anspruches 1 gelöst, wobei darauf abgestellt ist, dass der Kolbenschaft kippbeweglich gelagert ist und dass die Membran den Anzeigekolben zentriert. Zufolge dieser Ausgestaltung ist eine Füllstandanzeige angegeben, welche ohne zusätzliche Führungselemente und somit ohne schädliche Gleitreibungseinflüsse eine hohe Anzeigegenauigkeit bietet.

Die Gegenstände der weiteren Ansprüche sind nachstehend in Bezug zu dem Gegenstand des Anspruches 1 erläutert, können aber auch in ihrer unabhängigen Formulierung von Bedeutung sein.

In weiterer Einzelheit ist vorgesehen, dass die Zentrierung des Anzeigekolbens lediglich durch die rollbare Weichmembran erfolgt. Die Kippbeweglichkeit des Kolbenschaftes ist beispielsweise durch eine Linienanlage im Bereich eines Gehäuseabschnittes gegeben. Der im Bereich der so gebildeten schwimmenden Lagerstelle hervorgerufene Reibungsanteil ist zufolge dieser Ausgestaltung derart gering, dass dieser die Messgenauigkeit nicht negativ beeinflusst. In vorteilhafter Weise kann diesbezüglich weiter vorgesehen sein, dass der Kolbenschaft einen Fanghaken aufweist, mittels dessen der Anzeigekolben bei Erreichen einer Endstellung am Gehäuse verhakt. Zu Folge dieser Ausgestaltung verbleibt der Anzeigekolben in der Maximalstellung auch nach einem Ausschalten des Staubsaugers, was dem Benutzer auch nach einem Abschalten den nötigen Staubfilterbeutelwechsel visualisieren soll. Darüber hinaus kann der verrastete Fanghaken auch ein Abschalten des Staubsaugers bewirken. Eine Wiederinbetriebnahme des Staubsaugers ist dann erst wieder nach einem Staubfilterbeutelwechsel möglich. In einer vorteilhaften Weiterbildung des Erfindungsgegenstandes ist vorgesehen, dass die Membran in der Ruhestellung übergefaltet ist. Zufolge dessen weist die Membran in der Ruhestellung eine hohe Eigenstabilität zur zentrierten Halterung des Anzeigekolbens auf. Die Ruhestellung bezieht sich hierbei auf eine Situation, bei welcher die Druckdifferenz am Filterbeutel etwa gleich Null ist. Dies ist dann der Fall, wenn am Filterbeutel kein Druckabfall bzw. nur ein geringer Druckabfall, welcher noch keine Anzeigekolbenbewegung auslöst, zu verzeichnen ist. Des Weiteren ist vorgesehen, dass der Anzeigekolben zusammen mit der Membran luftdicht ausgebildet ist und im Zuge des Ausfahrens des Anzeigekolbens eine Druckluftaufblähung der Membran erfolgt. Zufolge dieser Druckluftaufblähung der Membran ist der Anzeigekolben stets durch die Membran zentriert. Letztere stellt hierbei eine Absperreinrichtung in Form eines beispielsweise schlauchförmigen, elastische Elementes dar, wobei weiter der Anzeigekolben die Membran dichtend durchsetzt und somit beidseitig der Membran einen Anbindungspunkt für ein Bauteil zur Visualisierung der Stellposition ermöglicht. Um den Gleitreibungsanteil weiter zu verringern ist die Membran zu dem diese umgebenden Gehäuse beabstandet. Die ringförmige Faltelung der Membran bewirkt eine stete Zentrierung des Anzeigekolbens, wobei die ringförmige Faltelung der Membran auf Ihrer Innenseite dem höheren Druckpotenzial zugewandt ist, so dass die Federwirkung der Membranringfalte pneumatisch unterstützt wird. Zudem ist in einer vorteilhaften Weiterbildung des Erfindungsgegenstandes vorgesehen, dass der Kolbenschaft gegen einen, bevorzugt die Pendellagerung des Kolbenschaftes aufweisenden Zwischenboden federabgestützt ist. Zufolge dessen fährt der Anzeigekolben bei einem Ausschalten des Staubsaugers aufgrund des nunmehr vorherrschenden Druckausgleichs in die federunterstützte Ruhestellung zurück, in welcher Ruhestellung der Anzeigekolben durch die übergefaltete Membran zentriert ist. In vorteilhafter Weise stützt sich die, den Kolbenschaft beaufschlagende Rückstellfeder an der, die Kippbeweglichkeit des Kolbenschaftes bewirkende Pendellagerstelle ab, womit bei einem Pendelhub kein Federversatz auftritt. Diesbezüglich ist weiter vorgesehen, dass die Pendellagerstelle auf der, dem höheren Druckpotenzial zugewandten Innenseite der Membran zugewandt angeordnet ist. Letztere ist zudem kolbenseitig des Zwischenbodens am Gehäuse gehaltert, wobei weiter vorgeschlagen wird, dass ein Radialkragen einer über Kopf angeordneten, topfartigen Membran dichtend zwischen dem Zwischenboden und einem weiteren Gehäuseabschnitt gehaltert, beispielsweise geklemmt ist. In einer vorteilhaften Weiterbildung des Erfindungsgegenstandes ist vorgesehen, dass der Anzeigekolben oberseitig eine Auslenkschräge aufweist. Letztere ist bevorzugt Teil eines Fanghakens mittels dessen der Anzeigekolben bei Erreichen einer Endstellung am Gehäuse verhakt. Im Zuge der Ausfahrverlagerung des Anzeigekolbens tritt die Auslenkschräge bspw. gegen eine Öffnungsrandkante des Gehäuses, so bspw. gegen die Randkante einer exzentrisch zum Anzeigekolben angeordneten Öffnung des Gehäuses zum Anschluss desselben an das niedrigere Druckpotenzial hinter dem Staubfilterbeutel. Bei einem weiteren Ausfahren des Anzeigekolbens wird dieser aufgrund der gegebenen Kippbeweglichkeit im Bereich des Kolbenschaftes gegen die zentrierende Wirkung der Membran gekippt. In der gänzlich ausgefahren, den maximalen Füllstand des Filterbeutels anzeigenden Stellung des Anzeigekolbens verliert der Fanghaken die Abstützung an der Öffnungsrandkante des Gehäuses, womit aufgrund der zentrierenden Wirkung der in dieser Stellung druckluftaufgeblähten Membran der Anzeigekolben und somit der Fanghaken wieder in die zentrierte Stellung unter gleichzeitigem Verhaken am Gehäuse zurückfährt. So ist weiter vorgesehen, dass der Anzeigekolben nur durch gesonderten Eingriff aus seiner Verhakungsstellung freigebbar ist. Dies kann beispielsweise bei einem Einlegen eines neuen Filterbeutels erfolgen. Dieser bewirkt bevorzugt durch direkte Beaufschlagung eine Verlagerung des Fanghakens aus der Rast- in die Freigabestellung, wonach durch die auf den Kolbenschaft einwirkende Rückstellfeder der Anzeigekolben in die abgesenkte Ruhestellung verfährt unter Überfalten der den Anzeigekolben zentrierenden Membran. Die beschriebene erfindungsgemäße Ausgestaltung der Füllstandanzeige konzentriert ein Höchstmaß von Einzelfunktionen auf nur ein Bauteil und reduziert somit den technischen Aufwand. Durch die Reduzierung dieser technischen Aufwendungen, wie Gleitlagerstellen, gefederte Rasteinrichtungen und bewegliche Entrastungseinrichtungen, wie sie im Stand der Technik beschrieben werden, erhöht sich die Anzeigegenauigkeit. Wie bereits erwähnt kann eine Ausgestaltung dahingehend gewählt sein, dass der Fanghaken sich an der Decke des Gehäuses, die eine diesbezügliche Öffnung aufweist unter Durchsetzung der Decke verhakt. Alternativ wird diesbezüglich vorgeschlagen, dass der Fanghaken sich an einer Seitenwand des Gehäuses unterhalb einer Gehäusedecke, welche Seitenwand eine diesbezügliche Öffnung aufweist unter Durchsetzung der Seitenwand verhakt. Der hierbei an dem kippbeweglich gelagerten Kolbenschaft angeordnete Fanghaken ist durch die Membran des Anzeigekolbens stets in Richtung auf die Raststellung vorgespannt, so dass sich der Fanghaken selbsttätig in die kolben verriegelnde Stellung verlagert. Auch diese Verhakungsstellung ist nur durch gesonderten Eingriff freigebbar, dies durch eine Verlagerung des Fanghakens entgegen der zentrierenden Wirkung der Membran, wonach aufgrund der auf den Kolbenschaft einwirkenden Feder der Kolben und hierüber der Kolbenschaft mit dem Fanghaken in die Grundstellung zurückfährt. In einer vorteilhaften Weiterbildung des Erfindungsgegenstandes ist vorgesehen, dass der Fanghaken eine nach unten weisende Auslenkschräge aufweist. Alternativ kann der Fanghaken sowohl eine nach unten weisende als auch eine oberseitige Auslenkschräge aufweisen. Zudem ist vorgesehen, dass die nach unten weisende Auslenkschräge in Richtung auf den Schaft des Fanghakens in einer Abflachung übergeht. Letztere ist in Ihrer Tiefe der Randstärke der vom Fanghaken zu durchsetzenden Gehäuseöffnung angepasst. Die Fußlinie der nach unten weisenden Auslenkschräge, d. h. die Übergangslinie zwischen Abflachung und Auslenkschräge, liegt weiter bevorzugt in Überdeckung mit einer Öffnungsaußenrandkante des Gehäuses. In weiterer Ausgestaltung kann vorgesehen sein, dass an dem Gehäuse außenseitig, in Überdeckung zu dem in der Raststellung nach außen ragenden Fanghaken eine Rippe ausgebildet ist. Um ein automatisches Zurücksetzen der Füllstandanzeige, d. h. eine Rückverlagerung des Fanghakens aus der Gehäuseöffnung zu ermöglichen, ist vorgesehen, dass das Gehäuse im Bereich der Kontur einer Halteplatte eines in den Staubsauger eingesetzten Filterbeutels angeordnet ist. So erfolgt erfindungsgemäß eine Rückverlagerung des Fanghakens aus der Gehäuseöffnung bei einem Wechsel des gefüllten Filterbeutels durch Beaufschlagung des Fanghakens beispielsweise mittels der Filterbeutel-Halteplatte oder weiterer an dem Filterbeutel angeordneter Elemente, wie beispielsweise mittels einer flexiblen Membran oder einem Teil des an der Halteplatte befestigten Staubfilterbeutels. In einer bevorzugten Ausgestaltung des Erfindungsgegenstandes ist vorgesehen, dass der Fanghaken und/oder die Rippe mit einem auslenkbaren Betätigungsabschnitt des Filterbeutels bzw. dessen Halteplatte zusammenwirkt. Üblicherweise bestehen Halteplatten für Filterbeutel aus mehreren Lagen aus einem Pappe-/Papierwerkstoff. Um den, mit dem Fanghaken zusammenwirkenden Betätigungsabschnitt auslenkbar auszugestalten wird dieser lediglich über eine oder zwei Lagen der Halteplatte ausgeführt. Diesbezüglich ist weiter bevorzugt, dass der auslenkbare Betätigungsabschnitt mit einem Übermaß vorgesehen ist, so dass das Zusammenwirken zwischen diesem und dem Fanghaken der Füllstandanzeige auch bei einer ungünstigen Paarung der Toleranzen von Halteplatte und Filterbeutelaufnahme ermöglicht ist. Der auslenkbare Betätigungsabschnitt des Filterbeutels, insbesondere der Halteplatte ist in einer Grundstellung, d. h. vor einer ersten Benutzung nicht ausgelenkt, erstreckt sich demnach bevorzugt in einer Ebene zur Halteplatte. Der Betätigungsabschnitt wird erst bei einem erstmaligen Einsetzen des Filterbeutels und damit einhergehender erster Kontaktierung mit der Füllstandanzeige ausgelenkt. Zufolge dessen ist eine Indikation des gebrauchten Filterbeutels gegeben. Bezüglich der Rücksetzung der Füllstandanzeige bei einem Filterbeutelwechsel wird vorgeschlagen, dass der Fanghaken durch den auslenkbaren Betätigungsabschnitt des Filterbeutels im Zuge des Einsetzens des Filterbeutels zurücksetzbar ist. Hierbei wird der Fanghaken beispielsweise durch den auslenkbaren Betätigungsabschnitt im Bereich einer oberseitigen Auslenkschräge beaufschlagt und aus der Gehäuseöffnung nach innen gedrängt. Im Betriebszustand des Filterbeutels liegt der ausgelenkte Betätigungsabschnitt des Filterbeutels an der außenseitig an dem Gehäuse ausgebildeten Rippe an, wobei eine hiernach nach oben weisende freie Randkante des ausgelenkten Abschnittes unterhalb des unteren Gehäuseöffnungsrandes liegt, so dass bei Erreichen des maximalen Füllstandes des Filterbeutels der Fanghaken störungsfrei wieder in die Gehäuseöffnung verrastend eintreten kann. Durch die angeformte Gehäuserippe wird bei einer Entnahme des Filterbeutels der ausgelenkte Betätigungsabschnitt an dem Fanghaken, diesen nicht beaufschlagend vorbeigeführt. Eine Rücksetzung der Füllstandanzeige in die Grundstellung erfolgt demnach bei einem Einsetzen eines ungebrauchten, entsprechend einen nicht ausgelenkten Betätigungsabschnitt aufweisenden Filterbeutels. Alternativ kann jedoch auch vorgesehen sein, dass der Fanghaken durch den auslenkbaren Betätigungsabschnitt des Filterbeutels im Zuge des Herausnehmens des Filterbeutels zurücksetzbar ist. Auch hier ist der Betätigungsabschnitt zunächst nicht ausgelenkt; verläuft demnach bevorzugt in einer Ebene zur Halteplatte. Bei einem Einsetzen des Filterbeutels erfolgt eine Auslenkung des Betätigungsabschnittes durch das Anzeigegehäuse, wobei auch hier in der Betriebsstellung eine nach oben weisende freie Randkante des ausgelenkten Betätigungsabschnittes unterhalb der Gehäuseöffnungsrandkante angeordnet ist, dies bei Anlehnung des freien Endes des Betätigungsabschnittes an der Gehäuseaußenwandung. Ist der Fanghaken verrastend in die Gehäuseöffnung eingefahren, so bewirkt der ausgelenkte Betätigungsabschnitt des Filterbeutels im Zuge des Herausnehmens des Filterbeutels eine Beaufschlagung des Fanghakens im Bereich seiner nach unten weisenden Auslenkschräge, so dass der Fanghaken aus der Gehäuseöffnung heraus in Richtung Grundstellung befördert wird.

Besonders bevorzugt ist es, die Füllstandsanzeige mit einem oder mehreren der Merkmale, wie sie vorstehend beschrieben worden sind, bei einem Staubsauger einzusetzen, der gemäß nachstehend im Einzelnen beschriebenen Verfahren zu betreiben ist.

In diesem Zusammenhang betrifft die Erfindung auch ein verfahren zum Betreiben eines Staubsaugers mit einem durch einen Elektromotor angetriebenen Gebläse, insbesondere Sauggebläse, einem Netzschalter und einem von einem Benutzer einzustellenden Leistungssteller zur Einstellung einer Drehzahl des Elektromotors in einem vorgegebenen Drehzahlbereich.

Derartige Verfahren werden bei üblichen Staubsaugern für sich bei der Benutzung durchgeführt. Hier wird beispielweise auf die US-A-4 733 431 verwiesen. Es hat sich jedoch gezeigt, dass insbesondere im Zuge der in jüngerer Zeit in Staubsaugern zunehmend integrierten Anzeige- und Messeinrichtungen nicht immer die gewünschte Genauigkeit hinsichtlich der Anzeige- und Messeinrichtungen erreicht wird.

Daher schlägt die Erfindung hinsichtlich des Verfahrens und Betreibens eines Staubsaugers vor, dass unabhängig von einer von einem Benutzer vorgenommenen Einstellung des Leistungsstellers der Elektromotor nach Einschalten des Netzschalters kurzzeitig auf maximale Drehzahl hochgefahren wird, wobei eine Füllstandanzeige für den Füllstand eines Filterbeutels mit einem Anzeigekolben, der durch die Druckdifferenz am Filterbeutel bewegbar ist und als Membrankolben mit einer rollbaren Weichmembran ausgebildet ist. Erfindungsgemäß hat sich überraschend gezeigt, dass ein solches kurzzeitiges Hochfahren des Elektromotors, insbesondere des Gebläses des Staubsaugers, die genannten Anzeige- und Messeinrichtungen "schärft". Eventuell bei nur leichtem Hochfahren gegebene Rasterscheinungen oder Nichtansprechen können hiermit wirkungsvoll vermieden werden.

Besonders bevorzugt ist, dass der Motor kurzzeitig auf eine maximale Drehzahl hochgefahren wird. Auch ist es bevorzugt, dass der Motor für einen Zeitraum von 0,1 bis zu 10 Sekunden hochgefahren wird.

Nachstehend ist die Erfindung anhand der beigefügten Zeichnungen, welche lediglich mehrere Ausführungsbeispiele darstellt, näher erläutert. Es zeigt:
- Fig. 1: eine schematische Schnittdarstellung durch eine Füllstandanzeige in einer ersten Ausführungsform, die Ruhestellung betreffend;
- Fig. 2: eine der Fig. 1 entsprechende Schnittdarstellung, jedoch die verrastete Maximalstellung zeigend;
- Fig. 3: eine Schnittdarstellung durch eine Füllstandanzeige einer zweiten Ausführungsform, die Ruhestellung des Anzeigekolbens betreffend;
- Fig. 4: eine der Fig. 3 entsprechende Darstellung, jedoch eine Zwischenstellung betreffend;
- Fig. 5: eine weitere der Fig. 3 entsprechende Darstellung, die verrastete Endstellung betreffend;
- Fig. 6: die Draufsicht auf die Füllstandanzeige gemäß Fig. 5;
- Fig. 7: die Unteransicht gegen die Füllstandanzeige;
- Fig. 8: eine der Fig. 5 entsprechende Darstellung, eine weitere Ausführungsform einer Füllstandanzeige betreffend;
- Fig. 9: eine geschnittene Detaildarstellung des Rastbereiches der Füllstandanzeige gemäß Fig. 8, die gelöste Stellung eines Fanghakens bei entnommenen Filterbeutel betreffend;
- Fig. 10: eine der Fig. 9 entsprechende Darstellung, jedoch bei eingelegtem Filterbeutel und nach einem Verrasten des Fanghakens am Anzeigengehäuse;
- Fig. 11: eine weitere der Fig. 9 entsprechende Darstellung, bei Beaufschlagung des Rasthakens im Zuge einer Filterbeutelentnahme;
- Fig. 12: eine perspektivische Darstellung des Rastbereiches der Füllstandanzeige mit zugeordneter Filterbeutel-Halteplatte, die Stellung gemäß Fig. 10 betreffend;
- Fig. 13: eine weitere perspektivische Darstellung, die Ausführungsform und Stellung gemäß Fig. 12 betreffend;
- Fig. 14: eine der Fig. 12 entsprechende Darstellung mit einer Filterbeutel-Halteplatte in einer weiteren Ausführungsform;
- Fig. 15: eine der Fig. 9 entsprechende Detaildarstellung, mit einer Füllstandanzeige in einer weiteren Ausführungsform, die verrastete Stellung des Fanghakens bei entnommenen Filterbeutel betreffend;
- Fig. 16: eine der Fig. 15 entsprechende Darstellung, bei Beaufschlagung des Rasthakens im Zuge des Einsetzen eines Filterbeutels;
- Fig. 17: eine der Fig. 10 entsprechende Darstellung, jedoch die Ausführungsform gemäß Fig. 15 betreffend;
- Fig. 18: eine weitere Darstellung gemäß Fig. 15, im Zuge einer Herausverlagerung des Filterbeutels;
- Fig. 19: eine der Fig. 12 entsprechende perspektivische Darstellung, die weitere Ausführungsform gemäß Fig. 17 betreffend;
- Fig. 20: eine perspektivische Darstellung gemäß Fig. 19 mit einer Filterbeutel-Halteplatte gemäß der in Fig. 14 dargestellten Form.

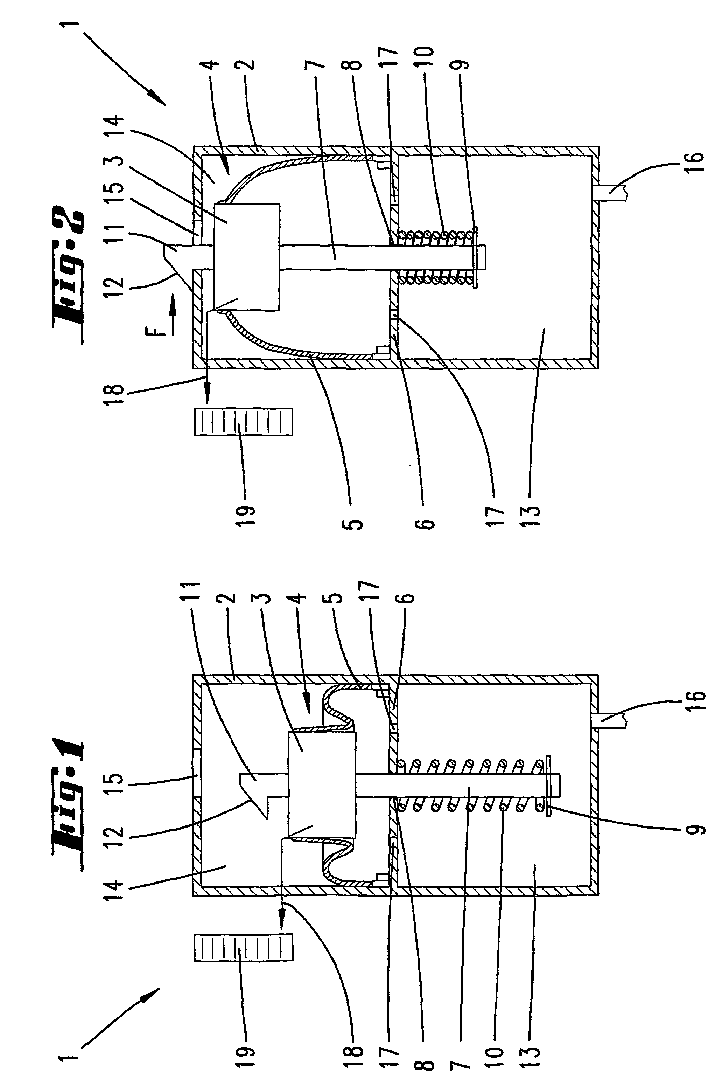

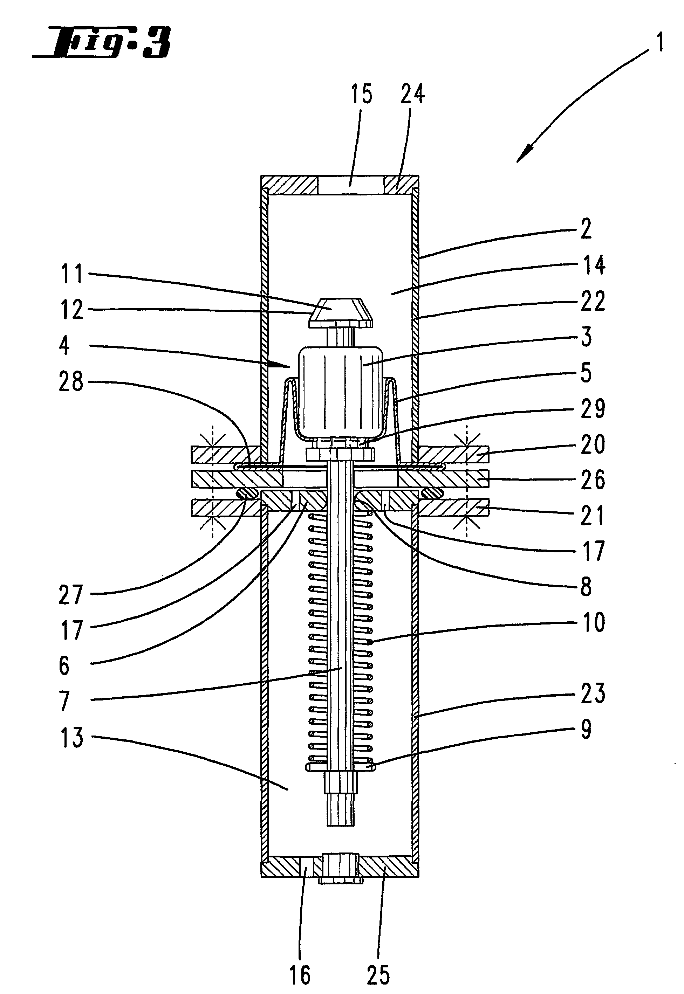

Dargestellt und beschrieben ist zunächst mit Bezug zu den Fig. 1 und 2 eine erste Ausführungsform einer Füllstandanzeige 1 für den Füllstand eines Filterbeutels in einem nicht dargestellten Staubsauger.

Die Füllstandanzeige 1 weist in einem, ggf. transparenten Gehäuse 2 einen Anzeigekolben 3 auf, welch Letzterer als Membrankolben 4 ausgebildet ist. Konkret ist die Ausgestaltung so gewählt, dass der Membrankolben 4 sich zusammensetzt aus dem, beispielsweise aus Hartkunststoff gebildeten Anzeigekolben 3 und einer dichtend an der Außenwandung des Anzeigekolben 3 befestigten, schlauchförmigen und elastischen Weichmembran 5.

Die Weichmembran 5 ist im Bereich eines in dem Gehäuse 2 angeordneten Zwischenbodens 6 dichtend gehaltert. An der, dem Zwischenboden 6 zugewandten Unterseite des im Wesentlichen einen kreisrunden Querschnitt aufweisenden Anzeigekolbens 3 ist zentral ein Kolbenschaft 7 angeformt. Letzterer durchsetzt den Zwischenboden 6 im Bereich einer zentralen Durchbrechung 8, welche zur kreislinienartigen Führung des Kolbenschaftes 7 als Pendellagerstelle ausgebildet ist.

Das dem Anzeigekolben 3 abgewandte freie Ende des Kolbenschaftes 7 ist mit einem Radialkragen 9 versehen, gegen welchen sich eine, den Kolbenschaft 7 umfassende Druckfeder 10 einerends abstützt. Das andere Ende der Druckfeder 10 tritt im Bereich der Pendellagerstelle bzw. Durchbrechung 8 unterseitig gegen den Zwischenboden 6, womit die Druckfeder 10 die Funktion einer Rückstellfeder für den Anzeigekolben 3 übernimmt.

Auf der dem Kolbenschaft 7 gegenüberliegenden Oberfläche weist der Anzeigekolben 3 einen zentral angeordneten Fanghaken 11 mit einer Auslenkschrägen 12 auf.

Durch den dichtend in dem Gehäuse 2 gehalterten Membrankolben 4 sind zwei Druckkammern 13 und 14 im Gehäuse 2 gebildet. Die oberhalb des Membrankolbens 4, dem Fanghaken 11 zugewandt ausgebildete Druckkammer 14 steht über eine in der Gehäusedecke 24 ausgeformte Gehäuseöffnung 15 in Verbindung mit dem Filterbeuteläußeren. Demnach entspricht das Druckpotenzial in der Druckkammer 14 dem des in Luftströmungsrichtung hinter dem Filterbeutel gemessenen Druckpotenzials.

Die Gehäuseöffnung 15 der Druckkammer 14 ist zur Körperachse des Anzeigekolbens 3 exzentrisch angeordnet, wobei der Fanghaken 11 des Anzeigekolbens 3 in axialer Verlängerung des Kolbenschaftes 7 an dem Anzeigekolben 3 angeformt ist.

Die der Unterseite der Weichmembran 5 zugeordnete Druckkammer 13 steht über eine gehäusebodenseitige Öffnung 16 mit dem Filterbeutelinneren in Verbindung, womit das Druckpotenzial in der Druckkammer 13 dem Druckpotenzial im Innern des Filterbeutels entspricht.

Die Funktion der Füllstandanzeige ist wie folgt:

Im Betrieb des nicht dargestellten Staubsaugers verändern sich die Druckpotenziale in den Druckkammern 13, 14 des Gehäuses 2. Ausgehend von einer Ruhestellung gemäß Fig. 1 wird ein Ansteigen des Druckpotenzials in der Druckkammer 13 bei gleich bleibendem Druckpotenzial in der Druckkammer 14 angenommen. Der in der Druckkammer 13 vorherrschende Druck steht, bedingt durch in dem Zwischenboden 6 vorgesehene Durchbrechung 17, an der Innenseite der Weichmembran 5 an. Durch das gegenüber dem Druckpotenzial in der Druckkammer 14 ansteigende Druckpotenzial in der Kammer 13 wird der Anzeigekolben 3 in Achsrichtung desselben bewegt, dies bedingt durch eine Druckluftaufblähung der in der Ruhestellung übergefalteten Weichmembran 5. Der Anzeigekolben 3 ist über den gesamten, freien Verlagerungsweg durch die Membran 5 zentriert.

Die Verschiebung des Anzeigekolbens 3 erfolgt in Abhängigkeit von den Druckunterschieden so lange bis der Fanghaken 11 mit seiner Auslenkschrägen 12 gegen die Randkante der gehäusedeckenseitigen Öffnung 15 tritt. Eine weitere druckbedingte Verlagerung des Anzeigekolbens 3 bewirkt über die Auslenkschräge 12 eine seitliche Auslenkung des Anzeigekolbens 3, wobei diese Auslenkung des Anzeigekolbens 3 durch die Pendelbeweglichkeit des Kolbenschaftes 7 in der Durchbrechung gewährleistet ist. Entsprechend der seitlichen Auslenkung wird die Weichmembran 5 elastisch verformt.

Nach einem vollständigen Durchtreten des Fanghakens 11 durch die deckenseitige Öffnung 15 wird dieser aufgrund der Rückstellkraft der aufgeblähten Membran 5 in eine, den Anzeigekolben 3 wieder zentrierende Stellung zurückverlagert, was ein Verhaken des Anzeigekolbens 3 an der Gehäusedecke gemäß Fig. 2 bewirkt.

Die Vertikalverlagerung des Anzeigekolbens geschieht gegen die Federkraft der Rückstellfeder 10, deren Federkraft angepasst ist an die üblichen Druckpotenziale in dem Gehäuse 2.

In der verrasteten Stellung gemäß Fig. 2 zeigt die Füllstandanzeige 1 die maximal zulässige Befüllung des Staubfilterbeutels an. Über den festgelegten Fanghaken 11 kann beispielsweise über mechanischem Wege ein Ausschalten des Staubsaugers bewirkt werden. Ist der maximale Füllstand in dem Filterbeutel nicht erreicht, so gelangt der Anzeigekolben 3 nicht in die diesen verrastende Stellung, was nach einem Abschalten des Staubsaugers eine durch die Druckfeder 10 hervorgerufene Rückstellung des Anzeigekolbens 3 und eine damit einhergehende Überfaltelung der Membran 5 in die Ruhestellung gemäß Fig. 1 zur Folge hat.

Bei einer transparenten Ausgestaltung des Gehäuses 2 kann der Füllstand des Staubfiltersbeutels mittels des Anzeigekolbens 3 dargestellt werden. Es ist jedoch auch möglich, an beliebiger Stelle des Anzeigekolbens 3 oder auch des Kolbenschaftes 7 ein Bauteil zur Visualisierung der Stellposition anzuordnen. In den Fig. 1 und 2 ist ein derartiges Bauteil schematisch dargestellt und mit der Ziffer 18 versehen. Dieses Bauteil ist als Zeiger ausgebildet, zur Anzeige des Füllstandes entlang einer schematisch dargestellten Skala 19.

Die Verhakungsstellung gemäß Fig. 2 ist nur durch gesonderten Eingriff aufhebbar, so beispielsweise durch seitlich Auslenkung des Fanghakens 11 in Richtung des Pfeiles F in Fig. 2. Diese beispielsweise horizontal wirkende Kraft F kann durch Einlegen eines neuen Filterbeutels aufgebracht werden.

Nach einer entsprechenden seitlichen Auslenkung des Fanghakens 11 bewirkt die gespannte Druckfeder 10 die Rückstellung des Membrankolbens 4 in die übergefaltete Ruhestellung gemäß Fig. 1.

Durch die schwimmende Lagerstelle im Bereich des von dem Kolbenschaft 7 durchsetzten Durchbruches 8 des Zwischenbodens 6 und durch die rollbare Weichmembran 5 ist eine sich selbst zentrierende vertikale Bewegung des Anzeigekolbens mit einer permanenten seitlichen Fig. 1 bedingt durch die Überfaltung und im Zuge des Ausfahrens des Anzeigekolbens 3 bedingt durch die Druckluftaufblähung den Anzeigekolben 3 stets in die zentrierte Stellung beaufschlagt. Durch diese Form der Lagerung beziehungsweise der ein Antriebselement bildenden Membran 5 werden die unerwünscht hohen Gleitreibungskräfte durch Rollreibungskräfte ersetzt.

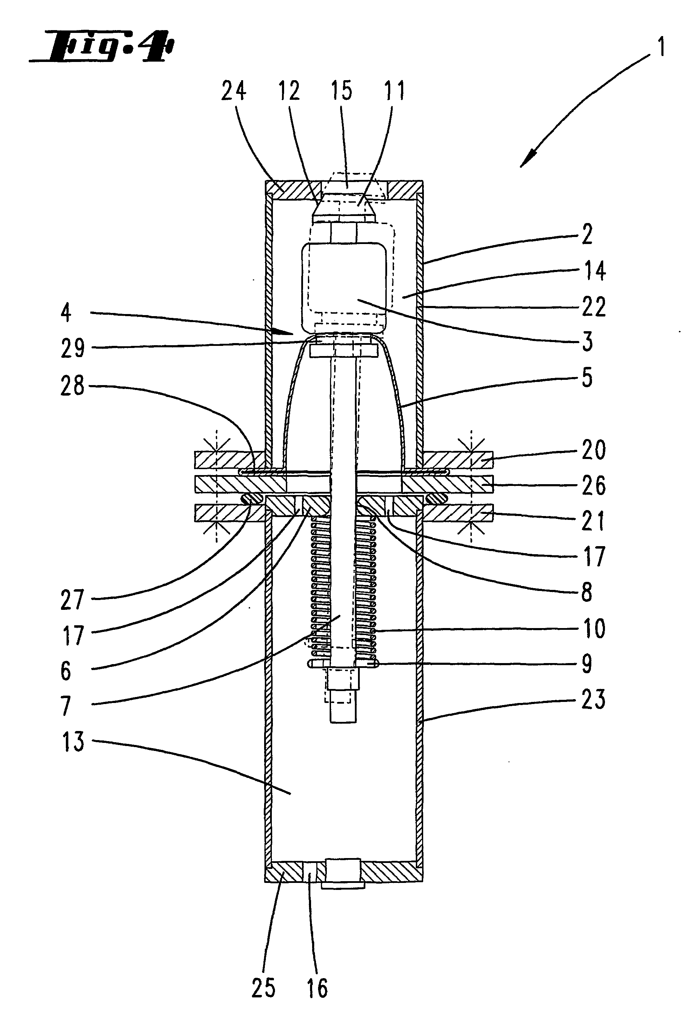

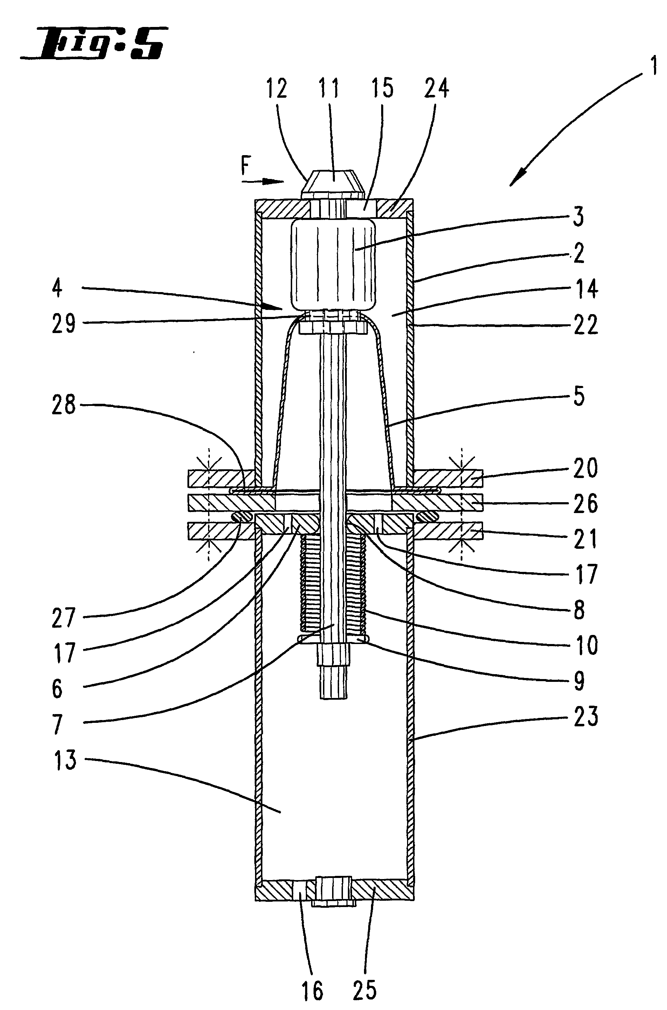

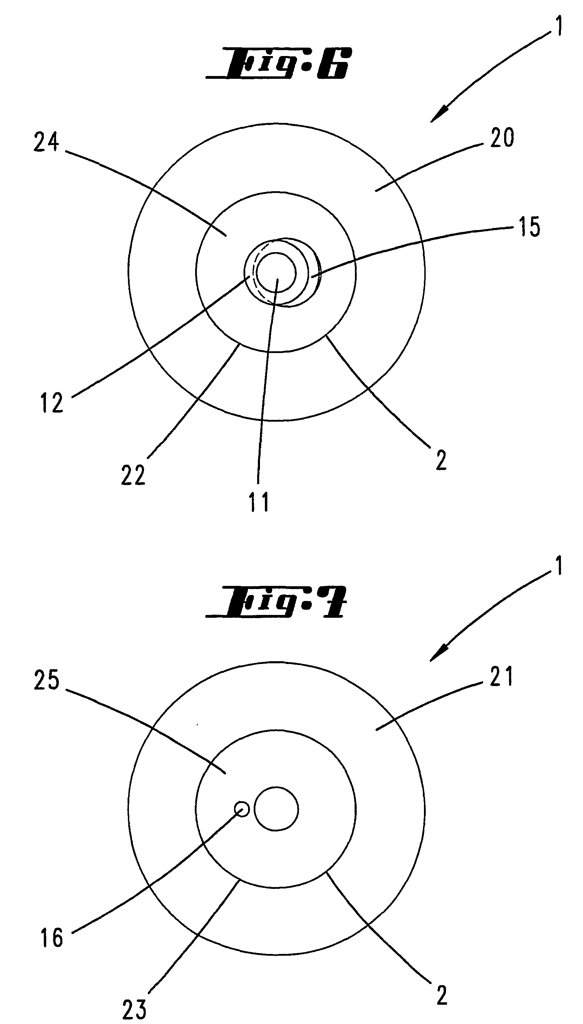

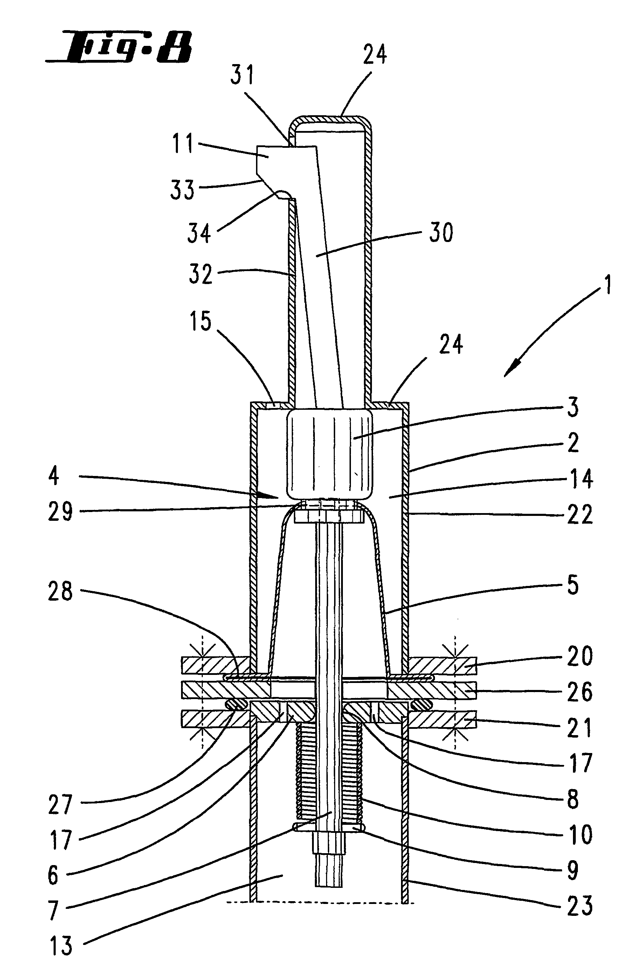

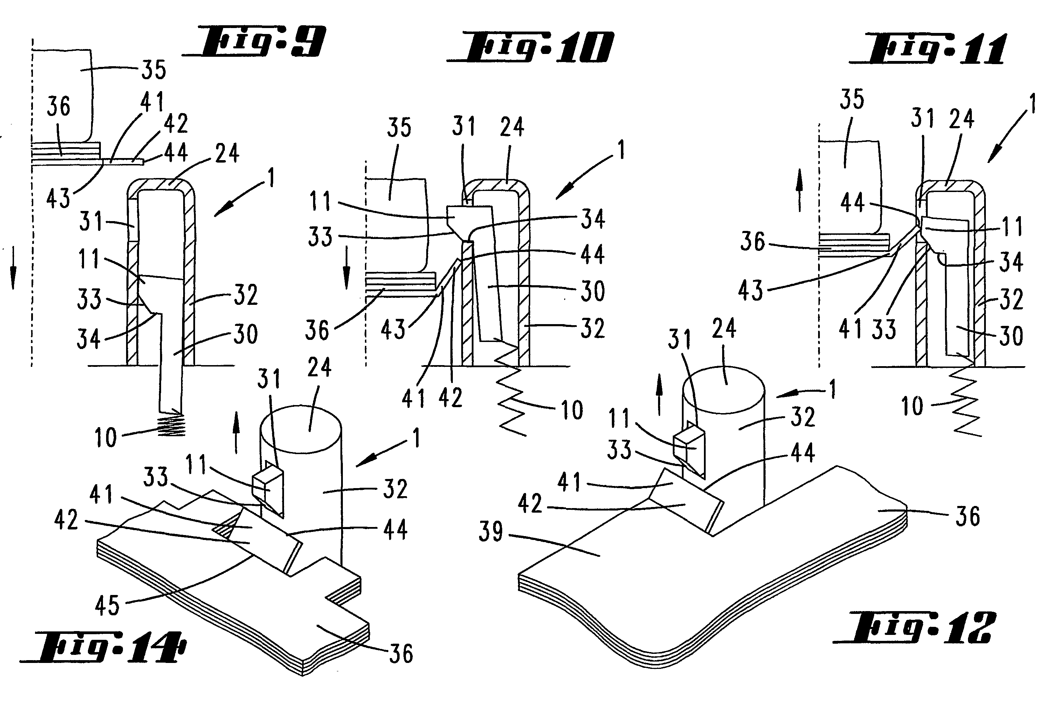

Die Fig. 3 bis 7 zeigen eine weitere Ausführungsform der erfindungsgemäßen Füllstandanzeige 1. Hier sind zur Bildung des Gehäuses 2 zwei mit Radialflanschen 20, 21 versehene, bevorzugt transparente Gehäusehülsen 22, 23 vorgesehen, wobei die Flansche 20, 21 jeweils an einem freien Ende der Hülsen 22, 23 außenseitig angeordnet sind.

Die Gehäusehülse 22 weist an dem, dem zugeordneten Flansch 20 gegenüberliegenden Ende eine scheibenförmige Decke 24 mit einer exzentrisch angeordneten Öffnung 15 auf. Die andere Gehäusehülse 23 besitzt entsprechend einen scheibenförmigen Gehäusebogen 25 mit einer Öffnung 16.

Die beiden Gehäusehülsen 22, 23 sind unter Zwischenlage einer kreisringförmigen Zwischenscheibe 26 gegeneinander verspannt.

Die untere Gehäusehülse 23 besitzt an dem, dem Flansch 21 zugeordneten Ende eine mit Durchbrechungen 17 versehene Deckenscheibe, welche den Zwischenboden 6 aubildet. Entsprechend ist auch hier zentral eine Durchbrechung 8 vorgesehen, welche als Pendellagerstelle ausgebildet ist. Zwischen dem Flansch 21 der unteren Gehäusehülse 23 und der Zwischenscheibe 26 ist eine Ringdichtung 27 positioniert.

Zwischen dem Flansch 20 der oberen Gehäusehülse 22 und der Zwischenscheibe 26 ist ein radial nach außen weisender Ringkragen 28 der Weichmembran 5 gefesselt.

Die Weichmembran 5 ist im Bereich eines taillierten Abschnittes 29 des Anzeigekolbens 3 an diesem dichtend angebunden.

Die Funktionsweise ist gleich dem des ersten Ausführungsbeispieles. Auch hier verlagert sich der Anzeigekolben 3 ausgehend von einer Ruhestellung gem. Fig. 3 bei Erhöhung des Druckpotenzials in der unteren Druckkammer 13 gegenüber dem Druckpotenzial in der oberen Druckkammer 14 in Richtung auf die Decke 24. Tritt die Auslenkschräge 12 des Fanghakens 11 gegen die Randkante der in der Decke 24 exzentrisch zum Anzeigekolben 3 ausgebildeten Öffnung 15, so erfolgt eine seitliche Auslenkung des Anzeigekolbens 3 mit samt dessen Kolbenschaft 7, was durch die gebildete Pendellagerstelle in dem Zwischenboden 6 und die elastische Verformbarkeit der Weichmembran 5 ermöglicht ist. Die ausgelenkte Stellung ist in der Fig. 4 in strichpunktierter Linienart angedeutet.

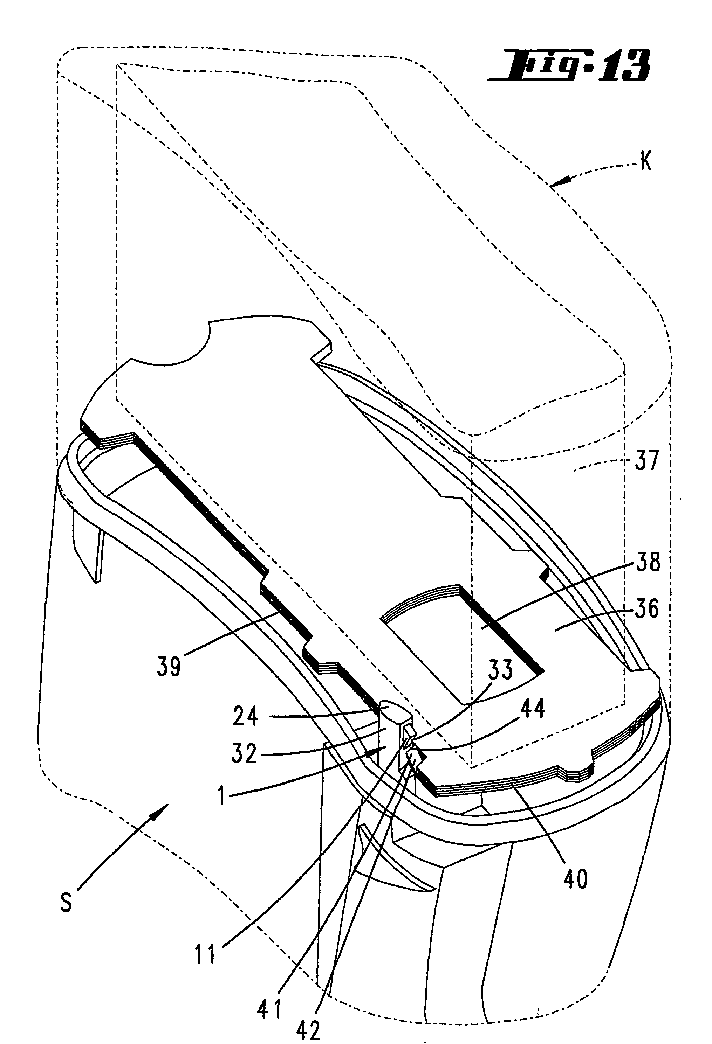

In Fig. 8 ist eine weitere Ausführungsform der erfindungsgemäßen Füllstandanzeige 1 dargestellt. Hierbei ist der Kolbenschaft 7 über den Anzeigekolben hinaus verlängert zur Bildung eines Fanghakenschaftes 30. Letzterer verläuft gegenüber der Kolbenschaftachse leicht geneigt.

Das Gehäuse 2 ist im Bereich des Fanghakenschaftes 30 gegenüber dem, den Membrankolben 4 umschließenden Bereich querschnittsverjüngt, wobei dieser querschnittsverjüngte Bereich durch eine Gehäusedecke 24 geschlossen ist. Die, die Druckkammer 14 mit dem Filterbeuteläußeren verbindende Gehäuseöffnung 15 ist bei diesem Ausführungsbeispiel im Bereich einer Ringstufe des Gehäuses 2 vorgesehen.

Der am freien Ende des Fanghakenschaftes 30 angeordnete Fanghaken 11 durchsetzt in der Raststellung gemäß Fig. 8, welche Raststellung den maximalen Füllgrat des Filterbeutels darstellt, eine unterhalb der Decke 24 angeordnete Öffnung 31 der Gehäuseseitenwand 32. Der Fanghaken 11 ist in diese Stellung aufgrund der zentrierenden Wirkung der Membran 5 vorgespannt.

Des Weiteren weist der Fanghaken 11 eine nach unten weisende Auslenkschräge 33 auf, welche in Richtung auf den Fanghakenschaft 30 in eine Abflachung 34 übergeht. Diese Abflachung 34 ist in ihrer Tiefe so gewählt, dass bei Anlage des Fanghakenschaftes 30 innenwandig des Gehäuses 2 die Fußlinie der anschließenden Auslenkschräge 33 in Überdeckung liegt mit einer äußeren Randkante der Gehäuseöffnung 31.

Der Auslenkschrägen 33 gegenüberliegend ist der Fanghaken 11 abgeflacht, bevorzugt etwa parallel zur Ausrichtung der Decke 24 verlaufend ausgebildet.

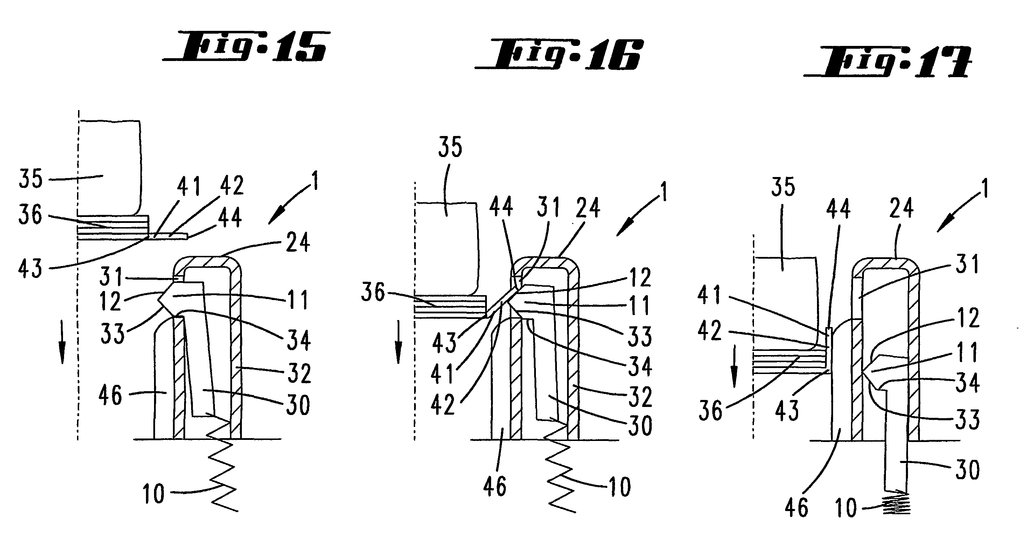

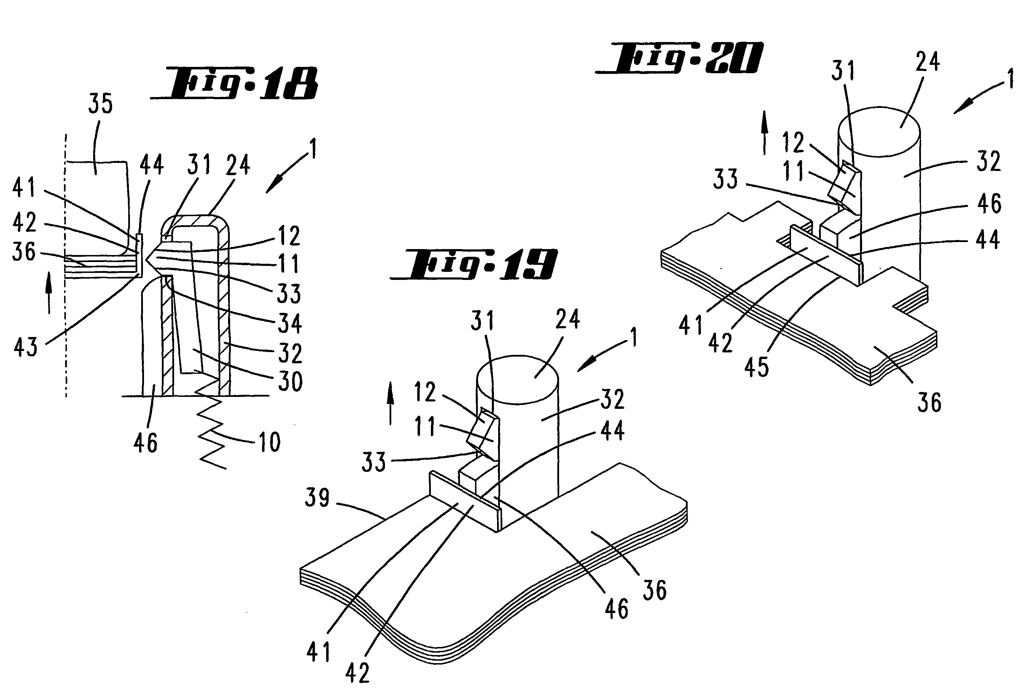

Die Fig. 9 bis 13 zeigen die Zusammenwirkung der in Fig. 8 dargestellen und beschriebenen Füllstandanzeige 1 mit einem in dem nicht dargestellten Staubsauger einzulegenden bzw. eingelegten Filterbeutel 35.

Dieser Filterbeutel 35 setzt sich im Wesentlichen zusammen aus einer, aus einem Pappe-/Papierwerkstoff bestehenden, mehrlagigen Halteplatte 36 und einem an diesem befestigen Staubfilterbeutel 37. Zum Eintrag von Staub in dem Staubbeutel 37 ist die Halteplatte 36 mit einer Öffnung 38 versehen.

Die Halteplatte 36 besitzt einen im Wesentlichen rechteckigen Grundriss, mit einer längeren Seite 39 und einer kürzeren Seite 40. Der längeren Randseite 39 zugeordnet ist in der Halteplatte 36 ein, einen Betätigungsabschnitt 41 bildender, auslenkbarer Abschnitt 42 ausgeformt. Dieser Betätigungsabschnitt 41 ist in einem Eckbereich der Halteplatte 36, etwa in einem ersten Drittel der Längsseite 39 ausgebildet, mit einer Schwenkachse 43, welche der Ausrichtung der kürzeren Seite 40 entsprechend ausgerichtet ist.

Der Betätigungsabschnitt 41 ist in dem dargestellten Ausführungsbeispiel gebildet durch eine Lage der aus Pappe-/Papierwerkstoff bestehenden Halteplatte 36, wobei die Schwenkachse 43 des Weiteren durch Perforation, Vorbruch, Verdichtung oder ähnlichem geschwächt oder mit einem elastischen Verbindungsglied versehen ist, so dass eine vorbestimmte Verformung ermöglicht wird. Darüber hinaus ist es auch denkbar, den Betätigungsabschnitt 41 aus einem Teil des an der Halteplatte 36 befestigten Staubfilterbeutels 37 zu bilden. Weiter kann auch der Betätigungsabschnitt aus einer flexiblen Membran bestehen.

Der Filterbeutel 35 ist in dem Staubsauger derart zu positionieren, dass der Betätigungsabschnitt 41 der Füllstandanzeige 1 zugewandt ausgerichtet ist.

In der Fig. 9 ist schematisch eine Situation dargestellt, bei welcher die Füllstandanzeige 1 in einer Grundstellung, d. h. in der nicht verrastenden Stellung verweilt und ein neuer ungebrauchter Filterbeutel 35 mit einem, in einer Ebene zur Halteplatte 36 ausgerichteten Betätigungsabschnitt 41 in Einsetzrichtung bewegt wird.

Der mit einem Übermaß versehene Betätigungsabschnitt 41 tritt im Zuge der Einsetzbewegung des Filterbeutels 35 gegen die Gehäusedecke 24 der Füllstandanzeige 1 und wird im Zuge der weiteren Einsetzverlagerung hierbei um seine Schwenkachse 43 ausgelenkt.

In Fig. 10 ist die Betriebsstellung des Filterbeutels 35 dargestellt. Der ausgelenkte Abschnitt 42 liegt mit seiner freien Randkante 44 an der Außenwandung des Gehäuses 2 unterhalb der Seitenwand-Öffnung 31 an. Der Fanghaken 11 kann demzufolge bei Erreichen des maximalen Füllstandes des Filterbeutels 35 ungehindert in die Seitenwand-Öffnung 31 verrastend eintreten.

Der Filterbeutel 35 ist in der Benutzungsstellung in Überkopflage in einer, auf das Staubsaugergehäuse S schwenkbaren Filterkammer K gehalten. Hierdurch bedingt ragt das Gehäuse 2, insbesondere der Rastbereich der in dem Staubsaugergehäuse S angeordneten Füllstandanzeige 1 über die Halteplatte 36 des Filterbeutels 35 vor, wobei weiter der Betätigungsabschnitt 41 in dieser Stellung nach oben ausgelenkt ist.

Bei einer Aufwärtsverlagerung des Filterbeutels 35 zur Entnahme desselben wird die nach unten weisende Auslenkschräge 33 des Fanghakens 11 durch den nach oben weisenden Betätigungsabschnitt 41 der Halteplatte 36 bzw. des Filterbeutels 35 beaufschlagt, wodurch der Fanghaken 11 aus der Öffnung 31 heraus in das Gehäuseinnere bewegt wird, zur Aufhebung der Verrastung. Hiernach wird der Fanghaken und der Membrankolben aufgrund der Federbelastung des Kolbenschaftes wieder in die Ruhestellung zurückverlagert.

Eine Rückstellung der Füllstandanzeige 1 erfolgt somit in diesem Ausführungsbeispiel bei der Entnahme des gefüllten Filterbeutels 35.

Durch den ausgelenkten Abschnitt 42 ist dem Benutzer ein Hinweis gegeben, dass dieser Filterbeutel bereits genutzt wurde.

Alternativ kann der Betätigungsabschnitt 41 wie in der Fig. 14 dargestellt in einer Ausbuchtung 45 der Halteplatte 36 angeordnet sein, so dass die Halteplatte 36 den Betätigungsabschnitt 41 ring- bzw. gabelförmig umschließt.

Die Fig. 15 bis 19 zeigen eine weitere Ausführungsform der Füllstandanzeige 1. Diese entspricht im Wesentlichen der der zuvor beschriebenen Ausführungsform. Lediglich der Fanghaken 11 ist hier auch oberseitig, d. h. der Auslenkschräge 33 gegenüberliegend mit einer oberen Auslenkschräge 12 versehen. Des Weiteren ist an dem Gehäuse 2 außenseitig, unterhalb der Seitenwandöffnung 31 eine Rippe 46 ausgebildet, deren Erstreckung in Radialrichtung des Gehäuses 2 so gewählt ist, dass eine Überdeckung zudem in der Raststellung gemäß der Fig. 15 nach außen ragenden Fanghaken 11 gegeben ist.

Wie dargestellt wirkt auch hier der Fanghaken 11 bevorzugt mit einem auslenkbaren Betätigungsabschnitt 41 der Filterbeutel-Halteplatte 36 zusammen.

Bei einem Einlegen eines neuen, ungebrauchten Filterbeutels mit einem in Ebenenerstreckung der Halteplatte 36 ausgerichteten Betätigungsabschnitt 41 wird letzterer aufgrund der gewählten Überlänge bei Auftreffen auf die Decke 24 des Gehäuses 2 ausgelenkt und hiernach über die obere Auslenkschräge 12 des Fanghakens 11 bewegt. Hierbei bewirkt der Betätigungsabschnitt 41 eine Rückverlagerung des Fanghakens 11 aus der Seitenwand-Öffnung 31 hinaus, zur Rückstellung der Füllstandanzeige 1 (vgl. Fig. 16).

In der Betriebsstellung gemäß Fig. 17 liegt der ausgelenkte Betätigungsabschnitt 41 an der gehäuseseitigen Rippe 46 an und ist hierbei - wie dargestellt - bevorzugt um 90° nach oben abgeschwenkt. Durch die Abstützung an der Rippe 46 wird diese abgeschwenkte Stellung des Betätigungsabschnittes 41 auch dann beibehalten, wenn eine Aufwärtsverlagerung des Filterbeutels 35 zur Entnahme desselben erfolgt, so dass der Betätigungsabschnitt 41 - wie in Fig 18 dargestellt - an dem bei maximalen Füllstand des Staubbeutels 37 verrasteten Fanghaken 11, nicht mit diesem zusammenwirkend, vorbeiläuft.

Auch in dieser Ausführungsform wird dem Benutzer durch den abgeschwenkten Betätigungsabschnitt 41 ein Hinweis auf einen bereits gebrauchten Filterbeutel 35 gegeben.

Die Auslösung der Füllstandanzeige 1 wird in dieser Ausführungsform im Zuge des Einlegens eines neuen, ungebrauchten Filterbeutels 35 bewirkt.

Schließlich zeigt Fig. 20 eine Ausführung der Füllstandanzeige 1 gemäß der bezüglich der in den Fig. 15 bis 19 beschriebenen Ausführungsform unter Zusammenwirkung des Fanghakens 11 mit einem in einer Ausbuchtung 45 der Halteplatte 36 angeordneten Betätigungsabschnitt 41 gemäß der Ausführungsform der Halteplatte 36 in Fig. 14.

## Patentansprüche

1. Füllstandanzeige (1) für den Füllstand eines Filterbeutels in einem Staubsauger mit einem Anzeigekolben (3), wobei der Anzeigekolben (3) durch die Druckdifferenz am Filterbeutel bewegbar ist, wobei weiter der Anzeigekolben (3) als Membrankolben (4) mit einer rollbaren Weichmembran (5) ausgebildet ist und einen Kolbenschaft (7) aufweist, der in eine Ruhestellung des Anzeigekolbens (3) vorgespannt ist, **dadurch gekennzeichnet, dass** der Kolbenschaft (7) kippbeweglich gelagert ist und dass die Membran (5) den Anzeigekolben (3) gegenüber seinem Gehäuse (2) zentriert.

2. Füllstandanzeige nach Anspruch 1, **dadurch gekennzeichnet, dass** der Kolbenschaft (7) einen Fanghaken (11) aufweist, mittels dessen der Anzeigekolben (3) bei Erreichen einer Endstellung am Gehäuse (2) verhakt.

3. Füllstandanzeige nach Anspruch 1 oder 2, **dadurch gekennzeichnet, dass** die Membran (5) in der Ruhestellung übergefaltet ist.

4. Füllstandanzeige nach einem der Ansprüche 1 bis 3, **dadurch gekennzeichnet, dass** der Anzeigekolben (3) zusammen mit der Membran (5) luftdicht ausgebildet ist und im Zuge des Ausfahrens des Anzeigekolbens (3) eine Druckluftaufblähung der Membran (5) erfolgt.

5. Füllstandanzeige nach einem der Ansprüche 1 bis 4, **dadurch gekennzeichnet, dass** der Kolbenschaft (7) gegen einen Zwischenboden (6) federabgestützt ist.

6. Füllstandanzeige nach einem der Ansprüche 1 bis 5, **dadurch gekennzeichnet, dass** die Membran (5) kolbenseitig des Zwischenbodens (6) am Gehäuse (2) gehaltert ist.

7. Füllstandanzeige nach einem der Ansprüche 1 bis 6, **dadurch gekennzeichnet, dass** der Anzeigekolben (3) oberseitig eine Auslenkschräge (12) aufweist.

8. Füllstandanzeige nach Anspruch 7, **dadurch gekennzeichnet, dass** die Auslenkschräge (12) Teil des Fanghakens (11) ist.

9. Füllstandanzeige nach einem der Ansprüche 2 bis 8, **dadurch gekennzeichnet, dass** der Anzeigekolben (3) nur durch gesonderten Eingriff aus seiner Verhakungsstellung freigebbar ist

10. Füllstandanzeige nach einem der Ansprüch 2 bis 9, **dadurch gekennzeichnet, dass** der Fanghaken (11) sich an der Decke (24) des Gehäuses (2), die eine diesbezügliche Öffnung (15) aufweist, unter Durchsetzung der Decke (24) verhakt.

11. Füllstandanzeige nach einem der Ansprüche 2 bis 10, **dadurch gekennzeichnet, dass** der Fanghaken (11) sich an einer Seitenwand (32) des Gehäuses (2) unterhalb einer Gehäusedecke (24), welche Seitenwand (32) eine diesbezügliche Öffnung (31) aufweist, unter Durchsetzung der Seitenwand (32) verhakt.

12. Füllstandanzeige nach einem der Ansprüche 2 bis 11, **dadurch gekennzeichnet, dass** der Fanghaken (11) eine nach unten weisende Auslenkschräge (33) aufweist.

13. Füllstandanzeige nach Anspruch 12, **dadurch gekennzeichnet, dass** die nach unten weisende Auslenkschräge (33) in Richtung auf den Schaft (30) des Fanghakens (11) in eine Abflachung (34) übergeht.

14. Füllstandanzeige nach einem der Ansprüche 2 bis 13, **dadurch gekennzeichnet, dass** an dem Gehäuse (2) außenseitig, in Überdeckung zu dem in der Raststellung nach außen ragenden Fanghaken (11) eine Rippe (46) ausgebildet ist.

15. Füllstandanzeige nach einem der Ansprüche 2 bis 14, **dadurch gekennzeichnet, dass** das Gehäuse (2) im Bereich der Kontur einer Halteplatte (36) eines in den Staubsauger eingesetzten Filterbeutels (35) angeordnet ist.

16. Füllstandanzeige nach einem der Ansprüche 2 bis 15, **dadurch gekennzeichnet, dass** der Fanghaken (11) und/oder die Rippe (46) mit einem auslenkbaren Betätigungsabschnitt (41) des Filterbeutels (35) zusammenwirkt.

17. Füllstandanzeige nach Anspruch 16, **dadurch gekennzeichnet, dass** der Fanghaken (11) durch den auslenkbaren Betätigungsabschnitt (41) des Filterbeutels (35) im Zuge des Einsetzen des Filterbeutels (35) zurücksetzbar ist.

18. Füllstandanzeige nach einem der Ansprüche 16 oder 17, **dadurch gekennzeichnet, dass** der Fanghaken (11) durch den auslenkbaren Abschnitt (41) des Filterbeutels (35) im Zuge des Herausnehmens des Filterbeutels (35) zurücksetzbar ist.

19. Verfahren zum Betreiben eines Staubsaugers mit einem durch einen Elektromotor angetriebenen Gebläse, insbesondere Sauggebläse, einem Netzschalter und einem von einem Benutzer einzustellenden Leistungssteller zur Einstellung einer Drehzahl des Elektromotors in einem vorgegebenen Drehzahlbereich, **dadurch gekennzeichnet, dass** unabhängig von einer von einem Benutzer vorgenommenen Einstellung des Leistungsstellers der Elektromotor nach Einschalten des Netzschalters kurzzeitig auf maximale Drehzahl hochgefahren wird, wobei eine Füllstandanzeige für den Füllstand eines Filterbeutels mit einem Anzeigekolben vorgesehen ist, wobei der Anzeigekolben durch die Druckdifferenz am Filterbeutel bewegbar ist und als Membrankolben mit einer rollbaren Weichmembran ausgebildet ist.

20. Verfahren nach Anspruch 19, **dadurch gekennzeichnet, dass** der Motor kurzfristig auf eine maximale Drehzahl hochgefahren wird.

21. Verfahren nach einem der Ansprüche 19 oder 20, **dadurch gekennzeichnet, dass** der Motor für einen Zeitraum von 0,1 bis 10 Sekunden hochgefahren wird.

## Claims

1. Level indicator (1) for the level of a filter bag in a vacuum cleaner, with an indicator piston (3), wherein the indicator piston (3) is movable by the pressure difference on the filter bag, wherein furthermore the indicator piston (3) is designed as a diaphragm piston (4) with a rollable soft diaphragm (5) and has a piston shaft (7) which is biased into a rest position of the indicator piston (3), **characterised in that** the piston shaft (7) is mounted, tiltably and **in that** the diaphragm (5) centres the indicator piston (3) relative to its housing (2).

2. Level indicator according to claim 1, **characterised in that** the piston shaft (7) has a catch hook (11) by means of which the indicator piston (3) catches on the housing (2) on reaching an end position.

3. Level indicator according to claim 1 or 2, **characterised in that** the diaphragm (5) is folded over in the rest position.

4. Level indicator according to any of claims 1 to 3, **characterised in that** the indicator piston (3) together with the diaphragm (5) is designed airtightly, and pneumatic inflation of the diaphragm (5) takes place in the course of extension of the indicator piston (3).

5. Level indicator according to any of claims 1 to 4, **characterised in that** the piston shaft (7) is spring-supported against an intermediate bottom (6).

6. Level indicator according to any of claims 1 to 5, **characterised in that** the diaphragm (5) is supported on the housing (2) on the piston side of the intermediate bottom (6).

7. Level indicator according to any of claims 1 to 6, **characterised in that** the indicator piston (3) has a deflecting slope (12) on the upper side.

8. Level indicator according to claim 7, **characterised in that** the deflecting slope (12) is part of the catch hook (11).

9. Level indicator according to any of claims 2 to 8, **characterised in that** the indicator piston (3) is releasable from its caught position only by separate intervention.

10. Level indicator according to any of claims 2 to 9, **characterised in that** the catch hook (11) catches on the top (24) of the housing (2), which has an opening (15) in this respect, and passes through the top (24).

11. Level indicator according to any of claims 2 to 10, **characterised in that** the catch hook (11) catches on a side wall (32) of the housing (2) beneath a housing top (24), which side wall (32) has an opening (31) in this respect, and passes through the side wall (32).

12. Level indicator according to any of claims 2 to 11, **characterised in that** the catch hook (11) has a downwardly facing deflecting slope (33).

13. Level indicator according to claim 12, **characterised in that** the downwardly facing deflecting slope (33) merges with a flattened portion (34) in a direction towards the shaft (30) of the catch hook (11).

14. Level indicator according to any of claims 2 to 13, **characterised in that** a rib (46) is formed on the outside of the housing (2), overlapping the catch hook (11) which extends outwards in the latch position.

15. Level indicator according to any of claims 2 to 14, **characterised in that** the housing (2) is arranged in the region of the contour of a holding plate (36) of a filter bag (35) inserted in the vacuum cleaner.

16. Level indicator according to any of claims 2 to 15, **characterised in that** the catch hook (11) and/or the rib (46) cooperates with a deflectable actuating section (41) of the filter bag (35).

17. Level indicator according to claim 16, **characterised in that** the catch hook (11) can be reset by the deflectable actuating section (41) of the filter bag (35) in the course of insertion of the filter bag (35).

18. Level indicator according to either of claims 16 or 17, **characterised in that** the catch hook (11) can be reset by the deflectable section (41) of the filter bag (35) in the course of removal of the filter bag (35).

19. Method for operating a vacuum cleaner with an electric motor-driven fan, in particular a suction fan, a mains switch and a power adjuster to be adjusted by a user for adjusting a speed of the electric motor within a predetermined speed range, **characterised in that**, independently of an adjustment of the power adjuster made by a user, after switching on the mains switch the electric motor is run up to maximum speed for a short time, wherein a level indicator is provided for the level of a filter bag, with an indicator piston, wherein the indicator piston is movable by the pressure difference on the filter bag and is designed as a diaphragm piston with a rollable soft diaphragm.

20. Method according to claim 19, **characterised in that** the motor is run up to maximum speed for a short time.

21. Method according to either of claims 19 or 20, **characterised in that** the motor is run up for a period from 0.1 to 10 seconds.

## Revendications

1. Indicateur de niveau de remplissage (1) indiquant l'état de remplissage d'un sac filtrant dans un aspirateur, comprenant un piston indicateur (3), le piston indicateur (3) étant mobile sous l'effet de la différence de pression dans le sac filtrant, le piston indicateur (3) étant en outre conçu sous forme de piston à membrane roulante (4) avec une membrane (5) souple et comportant une tige de piston (7), qui est précontrainte dans une position de repos du piston indicateur (3), **caractérisé en ce que** la tige de piston (7) est logée de manière basculante et **en ce que** la membrane (5) assure le centrage du piston indicateur (3) par rapport à son boîtier (2).

2. Indicateur de niveau de remplissage selon la revendication 1, **caractérisé en ce que** la tige de piston (7) comporte un crochet de retenue (11), au moyen duquel le piston indicateur (3) est accroché au boîtier (2) lorsqu'il a atteint une position finale.

3. Indicateur de niveau de remplissage selon la revendication 1 ou 2, **caractérisé en ce que** la membrane (5) est repliée sur elle-même dans la position de repos.

4. Indicateur de niveau de remplissage selon l'une des revendications 1 à 3, **caractérisé en ce que** le piston indicateur (3), conjointement avec la membrane (5), est réalisé de manière étanche à l'air et **en ce qu'**au cours de la sortie du piston indicateur (3) il se produit un gonflage à l'air comprimé de la membrane (5).

5. Indicateur de niveau de remplissage selon l'une des revendications 1 à 4, **caractérisé en ce que** la tige de piston (7) est en appui par ressort contre un fond intermédiaire (6).

6. Indicateur de niveau de remplissage selon l'une des revendications 1 à 5, **caractérisé en ce que** la membrane (5), du côté piston du fond intermédiaire (6), est maintenue contre le boîtier (2).

7. Indicateur de niveau de remplissage selon l'une des revendications 1 à 6, **caractérisé en ce que** le piston indicateur (3) comporte sur le côté supérieur une rampe de déviation (12).

8. Indicateur de niveau de remplissage selon la revendication 7, **caractérisé en ce que** la rampe de déviation (12) est une partie du crochet de retenue (11).

9. Indicateur de niveau de remplissage selon l'une des revendications 2 à 8, **caractérisé en ce que** le piston indicateur (3) peut être libéré hors de sa position d'accrochage uniquement par une manoeuvre spéciale.

10. Indicateur de niveau de remplissage selon l'une des revendications 2 à 9 **caractérisé en ce que** le crochet de retenue (11) s'accroche à la paroi supérieure (24) du boîtier (2) après avoir traversé la paroi supérieure (24) qui comporte une ouverture (15) prévue à cet effet.

11. Indicateur de niveau de remplissage selon l'une des revendications 2 à 10, **caractérisé en ce que** le crochet de retenue (11) s'accroche à une paroi latérale (32) du boîtier (2), en dessous d'une paroi supérieure (24) après avoir traversé la paroi latérale (32) qui comporte une ouverture (31) prévue à cet effet.

12. Indicateur de niveau de remplissage selon l'une des revendications 2 à 11, **caractérisé en ce que** le crochet de retenue (11) comporte une rampe de déviation (33) orientée vers le bas.

13. Indicateur de niveau de remplissage selon la revendication 12, **caractérisé en ce que** la rampe de déviation (33) orientée vers le bas se prolonge par un épaulement plat (34) en direction de la tige (30) du crochet de retenue (11).

14. Indicateur de niveau de remplissage selon l'une des revendications 2 à 13, **caractérisé en ce qu'**une nervure (46) est réalisée sur la face extérieure du boîtier (2) en recouvrement du crochet de retenue (11) faisant saillie vers l'extérieur dans la position d'accrochage.

15. Indicateur de niveau de remplissage selon l'une des revendications 2 à 14, **caractérisé en ce que** le boîtier (2) est agencé dans la zone du contour d'une plaque de retenue (36) d'un sac filtrant (35) posé dans l'aspirateur.

16. Indicateur de niveau de remplissage selon l'une des revendications 2 à 15, **caractérisé en ce que** le crochet de retenue (11) et/ou la nervure (46) coopèrent avec une partie d'actionnement (41) extensible du sac filtrant (35).

17. Indicateur de niveau de remplissage selon la revendication 16, **caractérisé en ce que** le crochet de retenue (11) est susceptible d'être ramené en position par la partie d'actionnement (41) extensible du sac filtrant (35) au moment de la mise en place du sac filtrant (35).

18. Indicateur de niveau de remplissage selon la revendication 16 ou 17, **caractérisé en ce que** le crochet de retenue (11) est susceptible d'être ramené en position par la partie d'actionnement (41) extensible du sac filtrant (35) au moment de l'extraction du sac filtrant (35).

19. Procédé de fonctionnement d'un aspirateur avec une soufflerie actionnée par un moteur électrique, en particulier une soufflerie d'aspiration, un interrupteur d'alimentation et un régulateur de puissance à régler par un utilisateur pour régler la vitesse de rotation du moteur électrique dans une plage de vitesses de rotation prédéfinie, **caractérisé en ce qu'**après la mise en marche de l'interrupteur d'alimentation, le moteur électrique est entraîné temporairement à la vitesse de rotation maximale, indépendamment du réglage effectué par un utilisateur sur le régulateur de puissance, **en ce qu'**est prévu un indicateur de niveau de remplissage indiquant l'état de remplissage d'un sac filtrant avec un piston indicateur, le piston indicateur étant mobile sous l'effet de la différence de pression dans le sac filtrant et étant réalisé sous la forme de piston à membrane avec une membrane roulante souple.

20. Procédé selon la revendication 19, **caractérisé en ce que** le moteur est amené en un court laps de temps à une vitesse de rotation maximale.

21. Procédé selon la revendication 19 ou 20, **caractérisé en ce que** le moteur est entraîné à la vitesse maximale pendant une courte durée de 0,1 à 10 secondes.
